# EUROPÄISCHE PATENTSCHRIFT

(11) **EP 0 938 966 B1**
(45) Veröffentlichungstag und Bekanntmachung des Hinweises auf die Patenterteilung: **27.03.2002**
(21) Anmeldenummer: 98124163.1
(22) Anmeldetag: 19.12.1998
(51) Int. Cl.: B29C 67/24, B01F 15/00

(54) **Verfahren und Vorrichtung zum Spritzgiessen von aus mindestens zwei unterschiedlichen Materialien bestehenden Kunststoffgegenständen**
Process and apparatus for injection moulding of plastic parts consisting of at least two different materials
Procédé et équipment pour l'injection de pièces plastiques moulées comprenant au moins deux matériaux différents

(30) Priorität: 28.02.1998 DE 19808620
(43) Veröffentlichungstag der Anmeldung: 01.09.1999
(73) Patentinhaber: Battenfeld GmbH, D-58540 Meinerzhagen (DE)
(72) Erfinder: Eckardt, Helmut, Dipl.-Ing., 58540 Meinerzhagen (DE); Ehritt, Jürgen, 57271 Hilchenbach (DE); Hill, Karl-Heinz, 58515 Lüdenscheid (DE)

(56) Entgegenhaltungen:
- EP-A- 0 494 451
- EP-A- 0 684 125
- DE-A- 3 317 734
- DE-U- 7 414 436
- US-A- 3 031 271
- US-A- 4 155 969
- US-A- 4 497 763
- US-A- 4 548 652
- DR. RER. NAT. E. BRANDAU: "Reaktionsharzgebundene Produkte in der Elektrotechnik" KUNSTSTOFFE, Bd. 75, Nr. 3, - März 1985 Seiten 168-172, XP002098079 MUNCHEN DE
- PATENT ABSTRACTS OF JAPAN vol. 012, no. 356 (M-745), 26. September 1988 & JP 63 112126 A (NIPPON ZEON CO LTD), 17. Mai 1988
- BERGER S ET AL: "SPUELEN MIT EINER KOMPONENTE PURGING WITH ONE COMPONENT" KUNSTSTOFFE, Bd. 86, Nr. 2, 1. Februar 1996, Seite 186, 188, 190 XP000582723

## Beschreibung

Die Erfindung betrifft ein Verfahren zum Spritzgießen von aus mindestens zwei unterschiedlichen Materialien bestehenden Kunststoffgegenständen, das die Schritte aufweist:
a) Fördern einer ersten Kunststoffkomponente in ein Mischelement;
b) Zumindest teilweise gleichzeitig mit Schritt a): Fördern mindestens eines zweiten Materials, vorzugsweise eines zweiten Kunststoffmaterials, in das Mischelement;
c) Durchmischen der mindestens zwei Materialien in dem Mischelement;
d) Fördern der im Mischelement vermischten Materialien in die Kavität eines Spritzgießwerkzeugs.

Des weiteren betrifft die Erfindung eine Vorrichtung zum Spritzgießen solcher Kunststoffgegenstände, insbesondere zur Durchführung des Verfahrens.

Bei der Herstellung von Kunststoffgegenständen, die aus mehreren Rohmaterialien bestehen, kommt es darauf an, diese möglichst gut vor dem Einspritzen ins Formwerkzeug zu vermischen, damit aus den beiden unterschiedlichen Rohstoffen ein möglichst homogener Spritzgießwerkstoff entsteht. Der intensiven Vermischung der einzelnen Materialkomponenten kommt dabei eine große Bedeutung zu.

Das gattungsgemäße Verfahren ist aus dem **DE-GM 74 14 436** bekannt. Dort werden Mehrkomponenten-Kunststoffe, insbesondere Polyurethan, verarbeitet, indem einer Mischkammer die zu vermischenden einzelnen Komponenten zugeführt werden. Dabei werden die einzelnen Komponenten über Zuführungsleitungen in die Mischkammer gefördert. Gleichzeitig wird ein Rührwerk, das sich in der Mischkammer befindet, in Gang gesetzt. Damit beginnt auch der Austritt des durchmischten Kunststoffes aus der Austrittsöffnung der Mischkammer in die Werkzeugkavität.

Die **DE-33 17 734** zeigt ein Verfahren zum Reinigen eines Mischelementes und des Schmelzefließweges bis zur Düse, wobei zum Reinigen eine Komponente mit Hilfe einer getrennt angetriebenen zweiten Pumpe aus einem Vorratsbehälter gefördert wird.

Bei der Verarbeitung zweier oder mehrerer reaktiver Materialien (z. B. Epoxid-Harzen und Kunststoff) kann sich ein Problem daraus ergeben, daß nach dem Spritzgießen von Formteilen das reaktive Gemisch die Spritzgießvorrichtung verstopft und somit zusetzt.

Der Erfindung liegt daher die **Aufgabe** zugrunde, ein verbessertes Verfahren und eine zugehörige Vorrichtung zu schaffen, mit denen sichergestellt werden, daß auch bei der Verarbeitung reaktiver Gemische ein Zusetzen bzw. Verstopfen der Spritzgießmaschine vermieden wird.

Die **Lösung** dieser Aufgabe durch die Erfindung ist dadurch gekennzeichnet, daß das Verfahren weiterhin folgende Schritte aufweist:
e) vor, während und/oder nach dem Spritzgießen der Kunststoffgegenstände (1):
   Fördern eines Teils erster Kunststoffkomponente (K1) in ein volumenveränderliches Speicherelement (5), das an den
   Schmelzefließweg (12) der ersten Kunststoffkomponente (K1) angrenzt und/oder
   Fördern eines Teils zweiten Materials (K2) in ein volumenveränderliches Speicherelement (5), das an den Schmelzefließweg (13) des zweiten Materials (K2) angrenzt;
f) nach Beendigung des Spritzgießens der Kunststoffgegenstände (1) und/oder vor dem Einspritzen des gemischten Materials (K1, K2) für den nächsten zu fertigenden Kunststoffgegenstand (1): Fördern der in dem mindestens einen volumenveränderlichen Speicherelement (5) gespeicherten Kunststoffkomponente (K1) bzw. zweiten Materials (K2) in den Schmelzefließweg (6) des gemischten Materials (K1, K2), um auf diese Weise den Schmelzefließweg (6) von einem Gemisch aus beiden Kunststoffmaterialen (K1, K2) zu befreien bzw. um für die Fertigung des folgenden Kunststoffgegenstands (1) eine gewünschte Materialmischung (K1, K2) zu erhalten.

Mit der erfindungsgemäßen Idee wird also vor, während oder nach dem Spritzgießprozess in volumenveränderliche Speicherelemente vorzugsweise nicht-reaktives Rohmaterial einer der zu verarbeitenden Komponenten verbracht; dieses dort gespeicherte Material wird nach der Beendigung des Spritzgießprozesses wieder aus den Speicherelementen ausgetrieben, um dadurch die Spritzgießvorrichtung zu spülen und so zu reinigen. Das in den Speicherelementen gespeicherte Material kann auch dazu benutzt werden, um vor der Produktion des nächsten Kunststoffgegenstandes klar definierte neue Mischungsbedingungen für das Gemisch aus den mindestens zwei Komponenten zu schaffen, mit dem der nächste Gegenstand gefertigt wird.

Weiterbildungsgemäß ist vorgesehen, daß die Durchmischung der mindestens zwei Materialien (K1, K2) im Mischelement (2) durch eine von einem mechanischen Antrieb (7), insbesondere von einem elektrischen oder hydraulischen Antrieb, bewirkte Mischbewegung vorgenommen wird.

Die erfindungsgemäße Vorrichtung zum Spritzgießen von aus mindestens zwei unterschiedlichen Materialien (K1, K2) bestehenden Kunststoffgegenständen (1) weist die folgenden Elemente auf:
- ein erstes Förderelement (8) zum Fördern einer ersten Kunststoffkomponente (K1),
- mindestens ein zweites Förderelement (9) zum Fördern eines zweiten Materials, vorzugsweise eines zweiten Kunststoffmaterials (K2),
- ein Mischelement (2), in das die erste Kunststoffkomponente (K1) und das mindestens eine weitere Material (K2) gefördert wird, und
- einen Schmelzefließweg (6) der sich von dem ersten Förderelement (8) und dem zweiten Förderelement (9) bis in die Werkzeugkavität (3) erstreckt,
wobei über das Mischelement (2) die Materialien (K1, K2) in die Kavität (3) eines Spritzgießwerkzeugs (4) gelangen.

Erfindungsgemäß ist die Vorrichtung gekennzeichnet durch mindestens ein volumenveränderliches Speicherelement (5), das an den Schmelsefließweg (12) der ersten Kunststoffkomponente (K1) und/oder an den Schmelzefließweg (13) des zweiten Materials (K2) angrenzt, das zur Aufnahme von erster Kunststoffkomponente (K1) und/oder zweiten Materials (K2) vor, während und/oder nach dem Spritzgießen der Kunststoffgegenstände (1) und zur Abgabe von erster Kunststoffkomponente (K1) und/oder zweitem Material (K2) zu einem späteren Zeitpunkt geeignet ist.

Vorzugsweise ist vorgesehen, daß im Bereich des volumenveränderlichen Speicherelements (5) Temperierelemente (10) angeordnet sind, mit denen die Erstarrung des Kunststoffmaterials (K1, K2) beeinflußt werden kann.

Weiterhin ist es für eine genaue Prozeßführung sinnvoll, daß das volumenveränderliche Speicherelement (5) mit Mitteln (11) zum genauen Dosieren der Aufnahme und/oder Abgabe von Kunststoffkomponente (K1) oder Material (K2) ausgestattet ist.

Das volumenveränderliche Speicherelement (5) kann im Bereich des Fließweges (12) der ersten Kunststoffkomponente (K1), im Bereich des Fließweges (13) des zweiten Materials (K2) und/oder im Bereich des Fließweges (14) der Mischung aus beiden Materialen (K1, K2) im Bereich der Eintrittsöffnung in das Werkzeug (4) angeordnet sein.

Schließlich kann vorteilhafterweise vorgesehen werden, daß das volumenveränderliche Speicherelement (5) aus einem Kolben-Zylinder-System besteht.

Zwar könnte eine Spülung auch ohne das erfindungsgemäße Verfahren und der zugehörigen Vorrichtung erfolgen, indem nur eine Komponente extrudiert wird. Dies hätte allerdings den Nachteil, daß das auszuspritzende Volumen aufgrund des geringen Gegendrucks nicht genau bestimmbar und schlecht reproduzierbar wäre. Außerdem würde das auszuspritzende Material unkontrollierbar ins Freie gelangen. Dies alles wird in vorteilhafter Weise durch die vorliegende Erfindung verhindert.

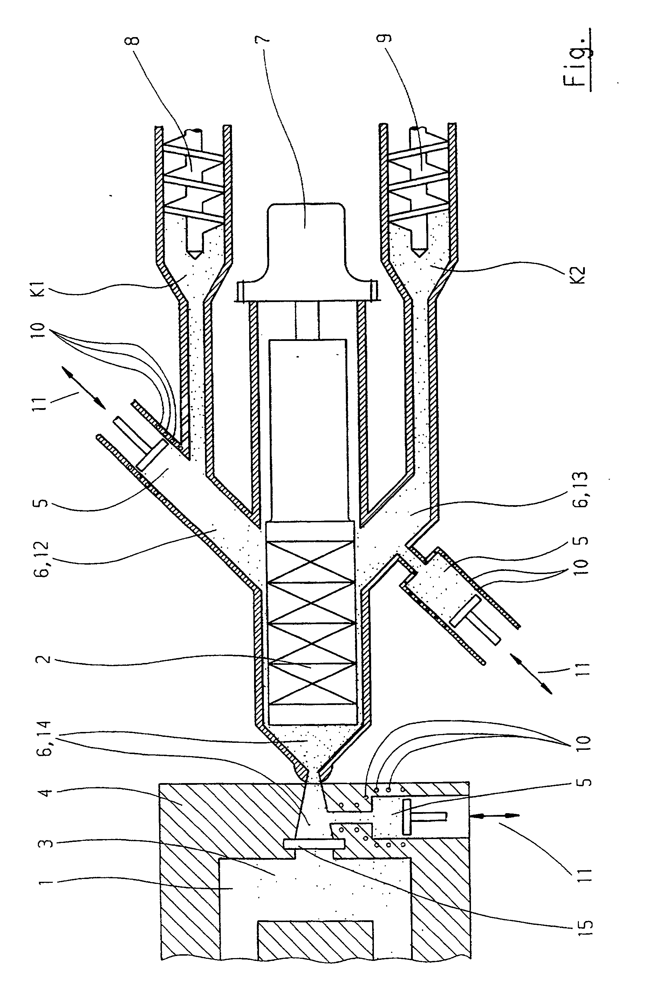

In der Zeichnung ist ein Ausführungsbeispiel der erfindungsgemäßen Vorrichtung dargestellt. Die Figur zeigt schematisch den Schnitt durch eine Spritzgießvorrichtung für die Verarbeitung zweier Kunststoffkomponenten K1 und K2.

Zwei unterschiedliche Kunststoffe K1 und K2 - K2 kann jedoch auch ein anderes Material als ein Kunststoff sein - werden in jeweils einem Plastifizierextruder 8 und 9 aufgeschmolzen, d. h. der Kunststoff wird zunächst in den jeweiligen Schneckeneinheiten plastifiziert. Die beiden Schmelzeströme werden einem Mischelement 2 zugeführt, d. h. der plastifizierte Kunststoff für das nächste zu fertigende Formteil wird von den üblichen Spritzeinheiten (in der Figur nicht näher dargestellt) der Extruder 8, 9 in das Mischelement 2 geleitet. Bei den beiden Komponenten K1 und K2 handelt es sich um reaktive Komponenten, d. h. nach Vermischung der Komponenten findet ein chemischer oder physikalischer Reaktionsprozeß statt.

Im Mischelement 2 werden die Schmelzen K1 und K2 vermischt und homogenisiert, bevor sie in die Kavität 3 eines Werkzeugs 4 eingespritzt werden. Dadurch entsteht in bekannter Weise ein Spritzgießformteil 1.

Von den Extrudern 8, 9 bis in die Werkzeugkavität 3 erstreckt sich der Fließweg 6 für die Schmelze. Er setzt sich zusammen aus einem Fließweg 12 der ersten Komponente K1, dem Fließweg 13 für die zweite Komponente K2 sowie dem Fließweg 14 für das Gemisch aus den Komponenten K1 und K2.

Das Mischelement 2 weist - in bekannter Weise - Misch- und/oder Scherelemente auf. Diese sind über einen Elektro- oder Hydromotor 7 im gezeigten Beispiel rotatorisch angetrieben, so daß es zu einer Vermischung beider Komponenten K1 und K2 kommt.

Vor der Einspritzung der Kunststoffkomponenten K1 und K2 wird der Elektro- oder Hydromotor 7 aktiviert, womit sich die Misch- und Scherelemente des Mischelements 2 in Bewegung setzen. Bereits die erste eintretende Komponente K1 wird so mit dem ebenfalls in das Mischelement 2 eintretende Material K2 effizient durchmischt.

Die gezeigte und beschriebene Vermischung erfolgt aktiv, d. h. durch einen 'dynamischen Mischer'. Genauso kann der Erfindungsgegenstand auch bei einem 'statischen' Mischer verwendet und eingesetzt werden, bei dem also keine separaten Mischelemente vorhanden sind, sondern die Vermischung der Komponenten K1, K2 bei der Durchströmung des Mischers erfolgt.

Die gute Vermischung der Einzelkomponenten ist insbesondere dann besonders wichtig, wenn die Komponenten - wie im dargestellten Fall - eine chemische Reaktion ausüben. Durch die gute Vermischung können beispielsweise auch Kunststoffschmelzen mit stark unterschiedlicher Viskosität gut durchmischt verarbeitet werden.

Zur Maximierung der Vermischungsleistung kann vorgesehen sein, daß der Antriebsmotor 7 des Mischelements 2 die Durchmischung bereits aktiviert, bevor Schmelze K1 bzw. K2 in das Mischelement 2 eintritt, und daß der Antrieb auch noch für gewisse Zeit nach dem Ende des Einspeisens von Schmelze in das Mischelement fortgesetzt wird.

Wenngleich der Fall nicht dargestellt ist, kann auch vorgesehen werden, anstelle der in der Figur dargestellten Konzeption ein Mischelement vorzusehen, bei dem zwei ineinandergreifende (ggf. verzahnte) Mischzylinder zum Einsatz kommen.

Erfindungsgemäß weist der Schmelzefließweg 6, bestehend aus den Fließweganteilen 12, 13 und 14, mindestens ein volumenveränderliches Speicherelement 5 auf. Im dargestellten Fall sind drei Speicherelemente 5 vorhanden: eines im Bereich des Fließweges 12, eines im Bereich des Fließweges 13 und eines im werkzeugnahen Fließwegbereich 14.

An dieser Stelle ist anzumerken, daß die beiden Speicherelemente 5 im Fließweg 12 und 13 der beiden Komponenten K1 und K2 alternative Ausführungen darstellen. Es wird in der Regel für eine Reinigung des Systems ausreichen, nur einen der beiden Fließwege mit einem Speicherelement 5 auszustatten, was durch die nachfolgenden Ausführungen deutlich werden wird.

Vor, während oder nach dem Spritzgießen von Formteilen 1 gelangt durch gesteuertes Zurückziehen der Kolbenelemente der Speicher 5 mittels nicht näher dargestellter Mittel 11 zum Betätigen der Speicherelemente 5 Schmelze in die Speicherelemente 5. In der Figur ist die Situation dargestellt, in der sich alle drei Speicher 5 in der Position befinden, in der bereits Schmelze in den Speicher 5 eingetreten ist. Damit die dort befindliche Schmelze während des Spritzgießens von Formteilen 1 nicht 'einfriert', sind Temperierelemente 10 um die Speicher 5 angeordnet.

Nach Abschluß des Spritzgießens einer Charge von Formteilen 1 befindet sich - vor allem im Bereich des Mischelements 2 - reaktives Gemisch der beiden Komponenten K1 und K2. Das Verbleiben dieses Gemisches in der Spritzgießvorrichtung würde zum Zusetzen der Fließwege führen.

Deshalb wird im Anschluß an den Spritzgießprozeß durch Verschieben der Kolbenelemente mittels der Mittel 11 die in den Speicherelementen 5 gespeicherte Kunststoffmasse ausgetrieben, so daß sie entlang des Fließweges strömt. Auf diese Weise wird die Spritzgießvorrichtung vom reaktiven Gemisch gereinigt bzw. gespült.

Zwecks Reinigung wird zunächst die Düse mit dem Mischelement 2 vom Werkzeug 4 weggefahren. Durch Betätigung eines der beiden Speicherelemente 5, die sich im Fließweg 12, 13 der beiden Komponenten K1 und K2 befinden - es wurde schon erwähnt, daß die beiden dargestellten Speicher 5 alternative Lösungen darstellen und ein einziger Speicher 5 ausreicht -, wird schmelzflüssiger Kunststoff einer Komponente entlang des Fließwegs durch das Mischelement 2 hindurchgetrieben. Insbesondere das Mischelement 2 wird hierdurch gereinigt.

Andererseits kann durch Betätigen des Kolbens des Speichers 5, der sich im Werkzeugbereich befindet, in gleicher Weise eine Spülung des Fließweges im Werkzeugbereich erfolgen. Um dies zu bewerkstelligen, kann ein Ventilelement 15 vorgesehen sein, das vor der Betätigung des Kolbens des Speichers 5 zunächst verschlossen wird, um eine definierte Strömungsrichtung der Schmelze aus dem Speicher 5 zu gewähren.

Um auch hier eine Befreiung des Fließweges 14 vom reaktiven Gemisch (aus K1 und K2) zu ermöglichen, muß vor dem Spritzgießvorgang dafür Sorge getragen werden, daß durch entsprechende Betätigung der Extruder und des Kolbens des werkzeugnahen Speichers 5 in diesen zunächst nur reines Material einer der Komponenten gelangt.

Zum Spülen kann nach Wegfahren des Düsenmundstücks vom Werkzeug eine Abspritzvorrichtung unter die Öffnung der Düse bzw. die Werkzeugöffnung gefahren werden, die das auszuspritzende Material aufnimmt. Die Spülung erfolgt durch gesteuertes Verfahren der Kolben der Speicher 5 mittels der Mittel 11. Das auszutreibende Material kann dabei entweder von einer Abspritzvorrichtung aufgenommen oder - zwecks Geruchsbelästigung gerade bei besonders reaktivem Gemisch - direkt in ein Wasserbad eingeleitet werden.

Wie der Figur bereits entnommen werden kann, gibt es verschiedene Möglichkeiten für die Anordnung des Speicherelements 5. Es kann sich an irgendeiner Stelle der Fließwege 12, 13 und 14 befinden; es kann Bestandteil der Spritzvorrichtung und/oder Bestandteil des Werkzeugs bzw. der Düsenplatte der Spritzgießmaschine sein.

Die volumenveränderlichen Elemente 11 im Fließweg 12 und 13 können auch dafür eingesetzt werden, um eine exakte Dosierung des jeweiligen ausgetriebenen Materials K1 bzw. K2 zu bewerkstelligen. Dann wirken die Speicherelemente 11 wie Dosiereinrichtungen, die in der deutschen Patentanmeldung 197 41 022 beschrieben sind.

Das im Bereich des Werkzeugs 4 angeordnete Speicherelement 5 kann durch eine entsprechende Betätigung des Kolbens auch dazu eingesetzt werden, um zu Beginn des Mischvorganges noch nicht optimal gemischtes Material aufzunehmen. Hierzu wird vorzugsweise das Ventilelement 15 zunächst geschlossen. Ist die Mischung optimal eingestellt, wird das Ventil 15 geöffnet, und die Mischung gelangt in die Kavität 3 des Werkzeugs 4.

### Bezugszeichenliste:

- 1: Kunststoffgegenstand
- 2: Mischelement
- 3: Kavität
- 4: Spritzgießwerkzeug
- 5: volumenveränderliches Speicherelement
- 6: Schmelzefließweg
- 7: mechanischer Antrieb
- 8, 9: Förderelement für die Materialien K1, K2: Extruder
- 10: Temperierelemente
- 11: Mittel zum genauen Betätigen des Speicherelements 5
- 12: Fließweg der ersten Kunststoffkomponente K1
- 13: Fließweg des zweiten Materials K2
- 14: Fließweg der Mischung der Komponenten K1 und K2
- 15: Ventilelement

- K1: erste spritzgießfähige Kunststoffkomponente
- K2: zweites Material

## Patentansprüche

1. Verfahren zum Spritzgießen von aus mindestens zwei unterschiedlichen Materialien (K1, K2) bestehenden Kunststoffgegenständen (1), das die Schritte aufweist:
a) Fördern einer ersten Kunststoffkomponente (K1) in ein Mischelement (2);
b) Zumindest teilweise gleichzeitig mit Schritt a): Fördern mindestens eines zweiten Materials, vorzugsweise eines zweiten Kunststoffmaterials (K2), in das Mischelement (2);
c) Durchmischen der mindestens zwei Materialien (K1, K2) in dem Mischelement (2);
d) Fördern der im Mischelement (2) vermischten Materialien (K1, K2) in die Kavität (3) eines Spritzgießwerkzeugs (4);
**dadurch gekennzeichnet,**
**daß** das Verfahren weiterhin folgende Schritte aufweist:
e) vor, während und/oder nach dem Spritzgießen der Kunststoffgegenstände (1):
Fördern eines Teils erster Kunststoffkomponente (K1) in ein volumenveränderliches Speicherelement (5), das an den
Schmelzefließweg (12) der ersten Kunststoffkomponente (K1) angrenzt und/oder
Fördern eines Teils zweiten Materials (K2) in ein volumenveränderliches Speicherelement (5), das an den Schmelzefließweg (13) des zweiten Materials (K2) angrenzt;
f) nach Beendigung des Spritzgießens der Kunststoffgegenstände (1) und/oder vor dem Einspritzen der vermischten Materialien (K1, K2) für den nächsten zu fertigenden Kunststoffgegenstand (1):
Fördern der gespeicherten ersten Kunststoffkomponente (K1) in den Schmelzefließweg (12) der ersten Kunststoffkomponente (K1) bzw. Fördern des gespeicherten zweiten Materials (K2) in den Schmelzefließweg (13) des zweiten Materials (K2), um auf diese Weise den Schmelzefließweg (6) von den gemischten Materialien zu befreien.

2. Verfahren nach Anspruch 1, **dadurch gekennzeichnet, daß** vor dem Spritzgießen der Kunststoffgegenstände (1) vermischtes Material (K1, K2) in ein volumenveränderliches Speicherelement (5), das an den Schmelzefließweg (14) des vermischten Materials (K1, K2) angrenzt, gefördert wird, um auf diese Weise den Schmelzefließweg (6) von noch nicht optimal gemischtem Material zu befreien.

3. Verfahren nach Anspruch 1 oder 2, **dadurch gekennzeichnet, daß** die Durchmischung der mindestens zwei Materialien (K1, K2) im Mischelement (2) gemäß Schritt c) von Anspruch 1 durch eine von einem mechanischen Antrieb (7), insbesondere von einem elektrischen oder hydraulischen Antrieb, bewirkte Mischbewegung vorgenommen wird.

4. Vorrichtung zum Spritzgießen von aus mindestens zwei unterschiedlichen Materialien (K1, K2) bestehenden Kunststoffgegenständen (1) zur Durchführung des Verfahrens nach einem der Ansprüche 1 oder 2, die aufweist:
- ein erstes Förderelement (8) zum Fördern einer ersten Kunststoffkomponente (K1),
- mindestens ein zweites Förderelement (9) zum Fördern eines zweiten Materials, vorzugsweise eines zweiten Kunststoffmaterials (K2),
- ein Mischelement (2), in das die erste Kunststoffkomponente (K1) und das mindestens eine weitere Material (K2) gefördert wird, und
- einen Schmelzefließweg (6) der sich von dem ersten Förderelement (8) und dem zweiten Förderelement (9) bis in die Werkzeugkavität (3) erstreckt,
wobei über das Mischelement (2) die Materialien (K1, K2) in die Kavität (3) eines Spritzgießwerkzeugs (4) gelangen,
**gekennzeichnet durch**
mindestens ein volumenveränderliches Speicherelement (5), das an den Schmelzefließweg (12) der ersten Kunststoffkomponente (K1) und/oder an den Schmelzefließweg (13) des zweiten Materials (K2) angrenzt, das zur Aufnahme von erster Kunststoffkomponente (K1) und/oder zweiten Materials (K2) vor, während und/oder nach dem Spritzgießen der Kunststoffgegenstände (1) und zur Abgabe von erster Kunststoffkomponente (K1) und/oder zweitem Material (K2) zu einem späteren Zeitpunkt geeignet ist.

5. Vorrichtung nach Anspruch 4, **dadurch gekennzeichnet, daß** ein weiteres volumenveränderliches Speicherelement (5), das an den Schmelzefließweg (14) der vermischten Materialen (K1, K2) angrenzt, das zur Aufnahme von vermischten Materialen (K1, K2) vor dem Spritzgießen der Kunststoffgegenstände (1) geeignet ist.

6. Vorrichtung nach Anspruch 4 oder 5, **dadurch gekennzeichnet, daß** im Bereich des volumenveränderlichen Speicherelements (5) Temperierelemente (10) angeordnet sind, mit denen die Erstarrung des Kunststoffmaterials (K1, K2) beeinflußt werden kann.

7. Vorrichtung nach einem der Ansprüche 4 bis 6, **dadurch gekennzeichnet, daß** das volumenveränderliche Speicherelement (5) mit Mitteln (11) zum genauen Dosieren der Aufnahme und/oder Abgabe von Kunststokomponente (K1) oder Material (K2) ausgestattet ist.

8. Vorrichtung nach einem der Ansprüche 4 bis 7, **dadurch gekennzeichnet, daß** das volumenveränderliche Speicherelement (5) im Bereich des Fließweges (12) der ersten Kunststokomponente (K1) angeordnet ist.

9. Vorrichtung nach einem der Ansprüche 4 bis 7, **dadurch gekennzeichnet, daß** das volumenveränderliche Speicherelement (5) im Bereich des Fließweges (13) des zweiten Materials (K2) angeordnet ist.

10. Vorrichtung nach einem der Ansprüche 4 bis 7, **dadurch gekennzeichnet, daß** das volumenveränderliche Speicherelement (5) im Bereich des Fließweges (14) der Mischung aus beiden Materialien (K1, K2) im Bereich der Eintrittsöffnung in das Werkzeug (4) angeordnet ist.

11. Vorrichtung nach einem der Ansprüche 4 bis 10, **dadurch gekennzeichnet, daß** das volumenveränderliche Speicherelement (5) aus einem Kolben-Zylinder-System besteht.

## Claims

1. Process for injection moulding of plastic objects (1) consisting of at least two different materials (K1, K2), which has the steps:
a) conveying a first plastic component (K1) to a mixing element (2);
b) at least partly at the same time as step a): conveying at least one second material, preferably a second plastic material (K2), to the mixing element (2);
c) mixing the at least two materials (K1, K2) in the mixing element (2);
d) conveying the materials (K1, K2) mixed in the mixing element (2) to the cavity (3) of an injection-moulding die (4);
**characterised in that**
the process also has the following steps:
e) before, during and/or after injection-moulding the plastic objects (1):
conveying some of the first plastic component (K1) to a volume-adjustable storage element (5), which borders on the melt flow path (12) of the first plastic component (K1) and/or
conveying some of the second material (K2) to a volume-adjustable storage element (5), which borders on the melt flow path (13) of the second material (K2);
f) after completing injection-moulding of the plastic objects (1) and/or before injection of the mixed materials (K1, K2) for the next plastic object (1) to be made:
conveying the stored first plastic component (K1) to the melt flow path (12) of the first plastic component (K1) or conveying the stored second material (K2) to the melt flow path (13) of the second material (K2), in order to free in this manner the
melt flow path (6) of the mixed materials.

2. Process according to claim 1, **characterised in that** before injection-moulding of the plastic objects (1), mixed material (K1, K2) is conveyed to a volume-adjustable storage element (5), which borders on the melt flow path (14) of the mixed material (K1, K2), in order to free in this manner the melt flow path (6) of material which is not yet optimally mixed.

3. Process according to claim 1 or 2, **characterised in that** mixing of the at least two materials (K1, K2) in the mixing element (2) according to step c) of claim 1 is carried out by a mixing movement effected by a mechanical drive (7), in particular by an electric or hydraulic drive.

4. Device for injection-moulding of plastic objects (1) consisting of at least two different materials (K1, K2) for carrying out the process according to one of claims 1 or 2, which has:
- a first conveying element (8) for conveying a first plastic component (K1),
- at least one second conveying element (9) for conveying a second material, preferably a second plastic material (K2),
- a mixing element (2), into which the first plastic component (K1) and the at least one further material (K2) is conveyed, and
- a melt flow path (6) which extends from the first conveying element (8) and the second conveying element (9) into the die cavity (3),
wherein the materials (K1, K2) pass into the cavity (3) of an injection-moulding die (4) via the mixing element (2),
**characterised by**
at least one volume-adjustable storage element (5), which borders on the melt flow path (12) of the first plastic component (K1) and/or on the melt flow path (13) of the second material (K2), which is suitable for receiving first plastic component (K1) and/or second material (K2) before, during and/or after injection-moulding of the plastic objects (1) and for delivering first plastic component (K1) and/or second material (K2) at a later point in time.

5. Device according to claim 4, **characterised in that** a further volume-adjustable storage element (5), which borders on the melt flow path (14) of the mixed materials (K1, K2), which is suitable for receiving mixed materials (K1, K2) before injection-moulding of the plastic objects (1).

6. Device according to claim 4 or 5, **characterised in that** tempering elements (10), with which solidification of the plastic material (K1, K2) may be influenced, are arranged in the region of the volume-adjustable storage element (5).

7. Device according to one of claims 4 to 6, **characterised in that** the volume-adjustable storage element (5) is equipped with means (11) for precise metering for receiving and/or delivery of plastic component (K1) or material (K2).

8. Device according to one of claims 4 to 7, **characterised in that** the volume-adjustable storage element (5) is arranged in the region of the flow path (12) of the first plastic component (K1).

9. Device according to one of claims 4 to 7, **characterised in that** the volume-adjustable storage element (5) is arranged in the region of the flow path (13) of the second material (K2).

10. Device according to one of claims 4 to 7, **characterised in that** the volume-adjustable storage element (5) is arranged in the region of the flow path (14) of the mixture of both materials (K1, K2) in the region of the inlet opening to the die (4).

11. Device according to one of claims 4 to 10, **characterised in that** the volume-adjustable storage element (5) consists of a piston-cylinder system.

## Revendications

1. Procédé de moulage par injection d'objets en plastique (1) constitués d'au moins deux matériaux différents (K1, K2), qui présente les opérations suivantes :
a) envoi d'un premier constituant plastique (K1) dans un élément mélangeur (2),
b) au moins en partie en même temps que l'opération a) : envoi d'au moins un deuxième matériau, de préférence d'un deuxième matériau plastique (K2), dans l'élément mélangeur (2),
c) mélange des au moins deux matériaux (K1, K2) dans l'élément mélangeur (2),
d) envoi des matériaux (K1, K2) mélangés dans l'élément mélangeur (2) dans la cavité (3) d'un moule d'injection (4),
**caractérisé par le fait**
**qu'**il présente en outre les opérations suivantes :
e) avant, pendant et/ou après le moulage par injection des objets en plastique (1) :
envoi d'une partie de premier constituant plastique (K1) dans un élément magasin de volume variable (5) qui est contigu à la voie d'écoulement à l'état fondu (12) du premier constituant plastique (K1) et/ou
envoi d'une partie de deuxième matériau (K2) dans un élément magasin de volume variable (5) qui est contigu à la voie d'écoulement à l'état fondu (13) du deuxième matériau (K2),
f) à l'issue du moulage par injection des objets en plastique (1) et/ou avant l'injection des matériaux mélangés (K1, K2) pour l'objet en plastique suivant à fabriquer (1) :
envoi du premier constituant plastique (K1) emmagasiné dans la voie d'écoulement à l'état fondu (12) de ce constituant plastique (K1) ou envoi du deuxième matériau (K2) emmagasiné dans la voie d'écoulement à l'état fondu (13) de ce matériau (K2), pour ainsi débarrasser des matériaux mélangés la voie d'écoulement à l'état fondu (6).

2. Procédé selon la revendication 1, **caractérisé par le fait que** du matériau (K1, K2) mélangé avant le moulage par injection des objets en plastique (1) est envoyé dans un élément magasin de volume variable (5) qui est contigu à la voie d'écoulement à l'état fondu (14) du matériau mélangé (K1, K2), pour ainsi débarrasser du matériau non encore mélangé de manière optimale la voie d'écoulement à l'état fondu (6).

3. Procédé selon l'une des revendications 1 et 2, **caractérisé par le fait que** le mélange des au moins deux matériaux (K1, K2) dans l'élément mélangeur (2) selon l'opération c) de la revendication 1 est effectué par un mouvement de mélange produit par un dispositif d'entraînement mécanique (7), en particulier par un dispositif d'entraînement électrique ou hydraulique.

4. Dispositif de moulage par injection d'objets en plastique (1) constitués d'au moins deux matériaux différents (K1, K2) pour la mise en oeuvre du procédé selon une des revendications 1 et 2, qui présente :
- un premier élément transporteur (8) pour le transport d'un premier constituant plastique (K1),
- au moins un deuxième élément transporteur (9) pour le transport d'un deuxième matériau, de préférence d'un deuxième matériau plastique (K2),
- un élément mélangeur (2) dans lequel sont envoyés le premier constituant plastique (K1) et l'autre ou les autres matériau(x) (K2), et
- une voie d'écoulement à l'état fondu (6) qui s'étend du premier élément transporteur (8) et du deuxième élément transporteur (9) jusque dans la cavité (3) du moule,
les matériaux (K1, K2) allant dans la cavité (3) d'un moule d'injection (4) en passant par l'élément mélangeur (2),
**caractérisé par**
au moins un élément magasin de volume variable (5) qui est contigu à la voie d'écoulement à l'état fondu (12) du premier constituant plastique (K1) et/ou à la voie d'écoulement à l'état fondu (13) du deuxième matériau (K2) et qui convient à la réception de premier constituant plastique (K1) et/ou de deuxième matériau (K2) avant, pendant et/ou après le moulage par injection des objets en plastique (1) et à l'émission de premier constituant plastique (K1) et/ou de deuxième matériau (K2) à un instant ultérieur.

5. Dispositif selon la revendication 4, **caractérisé par le fait qu'**un autre élément magasin de volume variable (5) qui est contigu à la voie d'écoulement à l'état fondu (14) des matériaux mélangés (K1, K2) convient à la réception de matériaux mélangés (K1, K2) avant le moulage par injection des objets en plastique (1).

6. Dispositif selon l'une des revendications 4 et 5, **caractérisé par le fait que** dans la zone de l'élément magasin de volume variable (5) sont prévus des éléments de réglage de température (10) qui permettent d'influer sur la solidification du matériau plastique (K1, K2).

7. Dispositif selon l'une des revendications 4 à 6, **caractérisé par le fait que** l'élément magasin de volume variable (5) est pourvu de moyens (11) de dosage précis de la réception et/ou de l'émission de constituant plastique (K1) ou de matériau (K2).

8. Dispositif selon l'une des revendications 4 à 7, **caractérisé par le fait que** l'élément magasin de volume variable (5) est placé dans la zone de la voie d'écoulement (12) du premier constituant plastique (K1).

9. Dispositif selon l'une des revendications 4 à 7, **caractérisé par le fait que** l'élément magasin de volume variable (5) est placé dans la zone de la voie d'écoulement (13) du deuxième matériau (K2).

10. Dispositif selon l'une des revendications 4 à 7, **caractérisé par le fait que** l'élément magasin de volume variable (5) est placé dans la zone de la voie d'écoulement (14) du mélange des deux matériaux (K1, K2) dans la zone de l'orifice d'entrée dans le moule (4).

11. Dispositif selon l'une des revendications 4 à 10, **caractérisé par le fait que** l'élément magasin de volume variable (5) est constitué d'un dispositif à cylindre et piston.
